(19) Europäisches Patentamt
European Patent Office
Office européen des brevets

(11) **EP 4 056 820 B1**

(12) **FASCICULE DE BREVET EUROPEEN**

(45) Date de publication et mention de la délivrance du brevet:
**12.06.2024   Bulletin 2024/24**

(21) Numéro de dépôt: **22159215.7**

(22) Date de dépôt: **28.02.2022**

(51) Classification Internationale des Brevets (IPC):
**F01N 3/20** *(2006.01)*          **F01N 11/00** *(2006.01)*

(52) Classification Coopérative des Brevets (CPC):
**F01N 3/2066; F01N 11/00;** F01N 2560/026;
F01N 2560/14; F01N 2610/02; F01N 2610/1453;
F01N 2610/146; F01N 2900/0404;
F01N 2900/0416; F01N 2900/1616; Y02A 50/20;
Y02T 10/12

(54) **PROCÉDÉ ET SYSTÈME DE DÉTECTION DE FUITES D'AMMONIAC DANS UN CATALYSEUR DE RÉDUCTION SÉLECTIVE D'OXYDES D'AZOTE**

VERFAHREN UND SYSTEM ZUR ERKENNUNG VON AMMONIAKLECKAGEN IN EINEM KATALYSATOR ZUR SELEKTIVEN REDUKTION VON STICKOXIDEN

METHOD AND SYSTEM FOR DETECTING LEAKS OF AMMONIA IN A CATALYST FOR SELECTIVE REDUCTION OF NITROGEN OXIDES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **11.03.2021   FR 2102412**

(43) Date de publication de la demande:
**14.09.2022   Bulletin 2022/37**

(73) Titulaire: **NEW H POWERTRAIN HOLDING, S.L.U.**
**47008 Valladolid (ES)**

(72) Inventeur: **DASSE, Benjamin**
**91600 SAVIGNY-SUR-ORGE (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A1- 3 653 853          WO-A1-2014/070244**
**US-A1- 2011 138 779     US-A1- 2012 255 277**

EP 4 056 820 B1

**Description**

La présente invention concerne le domaine des moteurs à combustion interne, et plus particulièrement les systèmes de post traitement des gaz d'échappement pourvus d'un catalyseur de réduction sélective d'oxydes d'azote, dit « sélective catalytic réduction », d'acronyme « SCR » en termes anglo-saxons, disposé dans la ligne d'échappement.

Les moteurs à combustion interne produisent des gaz d'échappement qui contiennent des substances polluantes telles que des hydrocarbures imbrûlés (HC), du monoxyde de carbone (CO), et des oxydes d'azote (NO$_x$). Il est nécessaire de traiter ces substances polluantes avant de les évacuer dans l'atmosphère. Les véhicules automobiles sont pourvus, à cet effet, d'un convertisseur catalytique installé dans la ligne d'échappement du moteur, afin d'oxyder les molécules réductrices constituées par le monoxyde de carbone (CO) et les hydrocarbures imbrûlés (HC), et de traiter les molécules d'oxydes d'azote (NO$_x$), sous l'action du monoxyde de carbone, pour les transformer en diazote (N$_2$) et en dioxyde de carbone (CO$_2$).

Les normes actuelles imposent de baisser les émissions de gaz polluants des véhicule automobiles sous un seuil. Ainsi, des systèmes de post-traitement des gaz de plus en plus complexes sont disposés dans la ligne d'échappement des moteurs qui fonctionnent en mélange pauvre.

De nombreux moteurs utilisent un catalyseur de réduction sélective des oxydes d'azote, dit Sélective Catalyst Réduction en termes anglo-saxons, d'acronyme « SCR ».

De manière générale, un catalyseur de réduction sélective des oxydes d'azote (SCR) fonctionne de manière continue pour réduire les oxydes d'azote entrants grâce à de l'ammoniac (NH$_3$) provenant d'une injection en amont dudit catalyseur d'un composé à base d'urée (Adblue®). Le principe de fonctionnement d'un catalyseur SCR est basé sur une réaction catalytique de réduction des oxydes d'azotes, contenus dans les gaz de combustion du moteur, par de l'ammoniac. Un pain de réduction catalytique, généralement composé de zéolithe, constitue le catalyseur des réactions de réduction des oxydes d'azote par de l'ammoniac dans le catalyseur SCR.

L'ammoniac utilisé dans ces réactions est généralement obtenu via l'injection du composé à base d'urée. Les molécules d'ammoniac ainsi libérées se stockent dans le pain de réduction catalytique pour réagir par la suite avec les oxydes d'azote (NOx) avec une certaine efficacité.

Par efficacité, on entend la proportion des oxydes d'azote entrants dans le catalyseur SCR qui y est effectivement réduite, le reste étant rejeté à la sortie du catalyseur SCR sans y avoir été traité.

L'efficacité dépend de plusieurs paramètres et notamment de la masse d'ammoniac déjà stockée à l'intérieur du catalyseur SCR.

Dans le cas où la capacité de stockage maximale du pain de réduction catalytique est atteinte, les molécules d'ammoniac traversent le pain de réduction catalytique sans être stockées et partent à l'échappement. L'ammoniac est un composé polluant et toxique.

Le contrôle de l'injection du composé à base d'urée permet de contrôler la masse d'ammoniac stockée dans le catalyseur SCR autour d'une valeur cible où l'efficacité est optimale.

Plus précisément, un calculateur du moteur injecte en continu une quantité de réducteurs qui correspond, d'une manière générale, à la quantité nécessaire pour, à la fois réduire la quantité estimée ou mesurée d'oxydes d'azote entrants avec une efficacité donnée, et, pour modifier le cas échéant la valeur de la masse d'ammoniac stockée dans le catalyseur SCR.

L'efficacité maximale du catalyseur est souvent recherchée. Toutefois, la valeur cible de masse d'ammoniac qui correspond à une valeur d'efficacité maximale est très proche de la capacité de stockage maximale en ammoniac du catalyseur SCR. Il existe donc un risque de fuite d'ammoniac.

Un surdosage de l'injection du composé à base d'urée, lorsque par exemple les injections de composé à base d'urée ont été mal calculées, provoque une fuite d'ammoniac en aval du catalyseur SCR, alors qu'un sous-dosage ne permet pas une réaction de réduction complète des oxydes d'azote contenus dans les gaz de combustion du moteur entrant dans le catalyseur SCR, et provoque des fuites d'oxydes d'azote en aval du catalyseur SCR.

Ainsi, au vu de la toxicité importante de l'ammoniac, la quantité d'ammoniac obtenue par l'injection du composé à base d'urée, ainsi que la masse d'ammoniac stockée dans le catalyseur SCR doivent être connues et finement adaptées afin de limiter les fuites d'ammoniac.

Actuellement, l'implantation d'un capteur d'ammoniac dans une ligne d'échappement est bien connue en laboratoire, mais elle n'est pas une solution industrielle.

Plusieurs solutions ont été envisagées pour détecter les fuites d'ammoniac, notamment en utilisant un capteur d'oxydes d'azote en aval d'un catalyseur SCR.

En effet, les capteurs d'oxydes d'azote ont la particularité de capter non seulement les oxydes d'azote, mais également l'ammoniac.

On pourrait se référer à cet égard au document US 2005/028285, qui décrit une méthode de détection par impulsion d'injection d'urée dans un catalyseur SCR, ou au document US 2011/0005202 qui décrit un modèle d'analyse fréquentielle, basé sur les mesures issues de deux capteurs d'oxydes d'azote en amont et en aval d'un catalyseur SCR.

Le document FR 3 015 558 - A1 décrit un procédé de détection et de quantification des fuites d'ammoniac en aval d'un catalyseur SCR permettant d'obtenir une estimation de la concentration d'oxydes d'azote réelle fuyant en aval et en amont du catalyseur, ainsi qu'une estimation de la concentration d'ammoniac réelle fuyant en aval du catalyseur en déterminant une valeur d'efficacité de référence du pain de réduction catalytique. Un tel procédé est également connu du document WO2014/070244A1.

Toutefois, aucun des procédés connus ne permet d'obtenir une détection et une quantification des fuites d'ammoniac fiable et précise.

Il existe un besoin pour améliorer la qualité et la robustesse des émissions polluantes, et notamment la précision de la détection et de la quantification des fuites d'ammoniac afin d'augmenter l'efficacité du système de post-traitement des effluents gazeux d'un moteur.

L'objet de la présente invention est donc de proposer un procédé et un système de détection et de quantification de fuites d'ammoniac dans un catalyseur de réduction d'oxydes d'azote « SCR ».

L'invention a pour objet un procédé de détection de fuites d'ammoniac en aval d'au moins un catalyseur de réduction sélective d'oxydes d'azote d'une ligne d'échappement d'un système de post-traitement des gaz d'échappement d'un moteur à combustion interne. Ledit système comprend un dispositif d'injection d'un agent réducteur directement en amont du catalyseur de réduction sélective d'oxydes d'azote, un premier capteur d'oxydes d'azote disposé en amont dudit catalyseur et un deuxième capteur d'oxydes d'azote disposé en aval dudit catalyseur.

Selon le procédé :

- on mesure la concentration en oxydes d'azote par le premier capteur,
- on mesure la concentration en oxydes d'azote par le deuxième capteur,
- on calcule la différence entre la concentration en oxydes d'azote mesurée par le premier capteur et la concentration oxydes d'azote mesurée par le deuxième capteur,
- on filtre ladite différence pour obtenir un signal filtré de ladite différence,
- on détecte une enveloppe numérique du signal filtré,
- on sature ladite enveloppe numérique du signal filtré entre zéro et l'infini pour déterminer une enveloppe numérique saturée,
- on détermine s'il y a des fuites d'ammoniac en fonction de l'enveloppe numérique saturée et d'une valeur de seuil prédéterminée, et
- on adapte les réglages de contrôle du catalyseur si l'enveloppe numérique saturée est supérieure à la valeur de seuil.

Le système et le procédé de détection de fuites d'ammoniac selon l'invention permettent d'améliorer le compromis entre l'efficacité de dépollution et les fuites d'ammoniac en détectant les fuites d'ammoniac et en donnant une valeur indicative en concentration desdites fuites.

L'observation d'une fuite d'ammoniac permet de révéler un dysfonctionnement du contrôle du dosage du composé à base d'urée et de le corriger à la baisse.

Elle permet aussi de révéler un vieillissement du catalyseur SCR, qui est un facteur de diminution de la capacité de stockage de l'ammoniac, et donc de le réparer, voire le remplacer.

En plus de détecter et de quantifier une éventuelle fuite d'ammoniac, la présente invention permet également d'améliorer l'efficacité de traitement des oxydes d'azote.

Par exemple, ladite différence entre la concentration en oxydes d'azote mesurée par le premier capteur et la concentration en oxydes d'azote mesurée par le deuxième capteur est filtrée par un filtre passe-bas.

Lors de l'adaptation des réglages du contrôle du catalyseur, on adapte, par exemple, les réglages du dispositif d'injection.

Selon un second aspect, l'invention concerne un système de détection de fuites d'ammoniac en aval d'au moins un catalyseur de réduction sélective des oxydes d'azote d'une ligne d'échappement d'un système de post-traitement des gaz d'échappement d'un moteur à combustion interne, ledit système comprenant un dispositif d'injection d'un agent réducteur directement en amont du catalyseur de réduction sélective des oxydes d'azote, un premier capteur d'oxydes d'azote disposé en amont dudit catalyseur et un deuxième capteur d'oxydes d'azote disposé en aval dudit catalyseur.

Le système de détection de fuites d'ammoniac comprend :

- un module de calcul de la différence entre la concentration en oxydes d'azote mesurée par le premier capteur et la concentration oxydes d'azote mesurée par le deuxième capteur,
- un module de filtrage de ladite différence pour obtenir un signal filtré de ladite différence,
- un module de détection d'une enveloppe numérique du signal filtré,
- un module de saturation de ladite enveloppe numérique du signal filtré entre zéro et l'infini pour déterminer une enveloppe numérique saturée,

- un module de détermination de fuites d'ammoniac en fonction de l'enveloppe numérique saturée et d'une valeur de seuil prédéterminée, et
- un module d'adaptation des réglages de contrôle du catalyseur si l'enveloppe numérique saturée est supérieure à la valeur de seuil.

Selon un troisième aspect, l'invention concerne un véhicule automobile comprenant un moteur à combustion interne comprenant un système de post-traitement des gaz d'échappement comprenant au moins un catalyseur de réduction sélective d'oxydes d'azote monté dans une ligne d'échappement, un dispositif d'injection d'un agent réducteur directement en amont du catalyseur de réduction sélective d'oxydes d'azote, un premier capteur d'oxydes d'azote disposé en amont dudit catalyseur, un deuxième capteur d'oxydes d'azote disposé en aval dudit catalyseur, et un système de détection de fuites d'ammoniac en aval du catalyseur de réduction sélective des oxydes d'azote tel que décrit précédemment.

Selon un mode de réalisation, le système de post-traitement des gaz d'échappement comprend au moins un deuxième catalyseur de réduction sélective d'oxydes d'azote monté dans une ligne d'échappement en aval du premier catalyseur de réduction sélective d'oxydes d'azote, le système de détection de fuites d'ammoniac étant configuré pour détecter les fuites d'ammoniac au moins en aval du premier catalyseur de réduction sélective d'oxydes d'azote.

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] représente, de manière très schématique, un exemple de structure d'un moteur à combustion interne d'un véhicule automobile équipé d'une ligne d'échappement pourvue d'un système de post-traitement des gaz d'échappement et un système de détection de fuites d'ammoniac selon l'invention ; et

[Fig 2] représente le synoptique d'un procédé de détection de fuites d'ammoniac selon l'invention mise en oeuvre par le système de la figure 1.

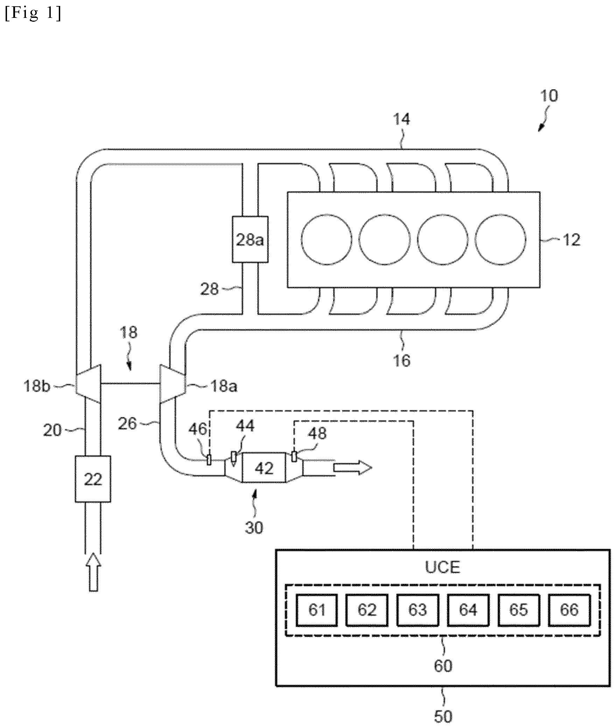

Sur la figure 1, on a représenté, de manière schématique, la structure générale d'un moteur à combustion interne 10, notamment de type Diesel, d'un véhicule automobile.

Ces architectures sont données à titre d'exemple et ne limitent par l'invention à la seule configuration à laquelle peut s'appliquer la correction de la mesure du débitmètre selon l'invention.

Dans l'exemple illustré, le moteur à combustion interne 10 comprend, de manière non limitative, quatre cylindres 12 en ligne, un collecteur d'admission d'air frais 14, un collecteur d'échappement 16 et un système de turbo-compression 18.

Les cylindres 12 sont alimentés en air par l'intermédiaire du collecteur d'admission 14, ou répartiteur d'admission, lui-même alimenté par une conduite 20 pourvue d'un filtre à air 22 et du turbocompresseur 18 du moteur 10.

Tel qu'illustré, chaque cylindre est alimenté par du carburant, par exemple du type gazole, par l'intermédiaire d'un injecteur de carburant (non référencé).

De manière connue, le turbocompresseur 18 comporte essentiellement une turbine 18a entraînée par les gaz d'échappement et un compresseur 18b monté sur le même arbre que la turbine 18a et assurant une compression de l'air distribué par le filtre à air 22, dans le but d'augmenter la quantité d'air admise dans les cylindres 12 du moteur 10. La turbine 18a peut être du type « à géométrie variable », c'est-à-dire que la roue de la turbine est équipée d'ailettes à inclinaison variable afin de moduler la quantité d'énergie prélevée sur les gaz d'échappement, et ainsi la pression de suralimentation.

Le moteur à combustion interne 10 comprend ainsi un circuit d'admission et un circuit d'échappement.

Le circuit d'admission comprend, d'amont en aval dans le sens de circulation de l'air :

- le filtre à air 22 ;
- le compresseur 18b du turbocompresseur 18 configuré pour comprimer l'air admis dans le moteur et le cas échéant des gaz d'échappement recyclés à basse pression, tel que sera décrit ultérieurement ; et
- le collecteur d'admission 14.

Le circuit d'échappement comprend, d'amont en aval dans le sens de circulation des gaz brûlés :

- le collecteur d'échappement 16 ;
- la turbine 18a du turbocompresseur 18 configurée pour prélever de l'énergie sur les gaz d'échappement qui la traversent, ladite énergie de détente étant transmise au compresseur 18b par l'intermédiaire de l'arbre commun, pour la compression des gaz d'admission ; et
- un système 30 de dépollution des gaz de combustion du moteur.

En ce qui concerne le collecteur d'échappement 16, celui-ci récupère les gaz d'échappement issus de la combustion et évacue ces derniers vers l'extérieur, par l'intermédiaire d'un conduit d'échappement des gaz 24 débouchant sur la turbine 18a du turbocompresseur 18 et par une ligne d'échappement 26 montée en aval de ladite turbine 18a.

De manière non limitative, le moteur 10 comprend un circuit de recirculation partielle 28 des gaz d'échappement à l'admission, dits « exhaust gas recirculation » ou « EGR », en termes anglo-saxons.

Sur l'exemple illustré par la figure, il s'agit d'un circuit 28 de recirculation des gaz d'échappement à haute pression, dit « EGR HP », qui prend naissance en un point du conduit d'échappement 24 en amont de la turbine 18a et qui renvoie les gaz d'échappement en un point de la conduite d'alimentation 14 en aval du compresseur 18b. Ce circuit 28 de recirculation comprend, de manière nullement limitative, une vanne « V EGR HP » 28a configurée pour réguler le débit des gaz d'échappement à haute pression qui sont recyclés à l'admission du moteur.

Le circuit 28 de recirculation des gaz d'échappement est configuré pour récupérer une partie des gaz d'échappement et les réinjecter dans le collecteur d'admission d'air 14, afin de limiter la quantité d'oxydes d'azote produits par la combustion tout en évitant la formation de fumée dans les gaz d'échappement. Le circuit de recirculation 28 pourrait, par exemple, comporter un échangeur thermique (non représenté).

Dans une variante non représentée, on pourrait également prévoir un deuxième circuit de recirculation des gaz d'échappement à basse pression, dit « EGR BP », prenant naissance en un point de la ligne d'échappement 26, en aval de ladite turbine 18a, et notamment en aval du système 30 de dépollution des gaz et renvoyant les gaz d'échappement en un point de la conduite 20 d'alimentation en air frais, en amont du compresseur 18b du turbocompresseur 18. Ces gaz d'échappement recyclés à l'admission du moteur sont ensuite comprimés par le compresseur 18b du moteur, avec l'air d'admission, avant d'arriver dans le moteur.

A titre d'exemple nullement limitatif, le système 30 de dépollution des gaz de combustion du moteur comprend un catalyseur 42 de réduction sélective des oxydes d'azotes, dit « sélective catalytic réduction », d'acronyme « SCR » en termes anglo-saxons, disposé dans la ligne d'échappement 26 en aval de la turbine 18a du turbocompresseur 18.

En variante, le système 30 de dépollution des gaz de combustion du moteur pourrait comprendre un catalyseur d'oxydation entre la turbine 18a du turbocompresseur 18 et le catalyseur 42 de réduction sélective des oxydes d'azotes et/ou un deuxième catalyseur de réduction sélective des oxydes d'azotes en aval du catalyseur 42 « SCR ».

Le système 30 comprend en outre un dispositif 44 d'injection d'un agent réducteur, par exemple à base d'urée (Adblue®), configuré pour injecter ledit agent réducteur directement en amont du catalyseur 42 « SCR ».

Le système 30 peut comprendre un mélangeur (non représenté) monté entre le dispositif d'injection 44 et le catalyseur 42 de réduction sélective des oxydes d'azote et configuré pour homogénéiser l'agent réducteur dans les gaz d'échappement.

Le système 30 de dépollution des gaz de combustion du moteur comprend un premier capteur 46 ou sonde d'oxydes d'azote NOx monté en amont du catalyseur 42 de réduction sélective des oxydes d'azote, en amont dispositif 44 d'injection d'un agent réducteur.

Le système 30 de dépollution des gaz de combustion du moteur comprend un deuxième capteur 48 ou sonde d'oxydes d'azote NOx monté en aval du catalyseur 42 de réduction sélective des oxydes d'azote.

Les capteurs 46, 48 d'oxydes d'azote ont la particularité de confondre les oxydes d'azote et l'ammoniac, à un facteur près.

L'information des capteurs 46, 48 peut se représenter sous forme de ratio molaire selon l'équation suivante :

$$[\text{Math 1}]$$

$$X_{\text{mesure}} = \alpha X_{NO_x} + \beta X_{NH_3}$$

Avec :

$X_{\text{mesure}}$, le ratio molaire de la mesure issue du capteur 46 ou 48 ;
$X_{NOx}$, la concentration en oxydes d'azote ;
$X_{NH}$, la concentration en ammoniac ; et
$\alpha$ et $\beta$, des valeurs constantes.

Le catalyseur 42 « SCR » sert à réduire une partie des oxydes d'azote entrants sous l'action de l'ammoniac. Les oxydes d'azote entrants sont soit traités, soit rejetés en aval du catalyseur 42, mais ne sont en aucun cas stockés.

Si le capteur 46 en aval du catalyseur 42 « SCR » indique une concentration en oxydes d'azote supérieure à la concentration en oxydes d'azote issue du capteur 48 en amont du catalyseur 42, c'est qu'il y a une fuite d'ammoniac.

Toutefois, les signaux sont très bruités. Il est donc nécessaire de traiter les signaux pour distinguer les concentrations en oxydes d'azote et en ammoniac.

Le moteur comprend une unité électronique de commande 50 configurée pour commander les différents éléments du moteur à combustion interne à partir de données recueillies par des capteurs, tels que, notamment le premier capteur 46 et le deuxième capteur 48 d'oxydes d'azote NOx.

L'unité de commande électronique 50 comprend un système 60 de détection d'une fuite d'ammoniac dans le catalyseur 42 « SCR ».

Le système 60 de détection d'une fuite d'ammoniac comprend un module 61 de calcul de la différence entre la concentration en oxydes d'azote mesurée par le premier capteur 46 en amont du catalyseur 42 de réduction sélective des oxydes d'azote et la concentration oxydes d'azote mesurée par le deuxième capteur 48 monté en aval du catalyseur 42.

Le système 60 de détection d'une fuite d'ammoniac comprend en outre un module 62 de filtrage de ladite différence, par exemple à l'aide d'un filtre passe-bas, permettant d'atténuer le bruit de cette différence et d'obtenir un signal filtré de ladite différence.

Le système 60 de détection d'une fuite d'ammoniac comprend en outre un module 63 de détection d'une enveloppe numérique du signal filtré.

Le système 60 de détection d'une fuite d'ammoniac comprend en outre un module 64 de saturation de l'enveloppe numérique du signal filtré entre zéro et l'infini de l'enveloppe numérique. Ainsi, lorsque l'enveloppe numérique est négative, la valeur saturée correspondante est égale à zéro. Le module 64 de saturation de l'enveloppe numérique du signal filtré détermine une enveloppe numérique saturée.

Le système 60 de détection d'une fuite d'ammoniac comprend en outre un module 65 de détermination de fuites d'ammoniac en fonction de l'enveloppe numérique saturée et d'une valeur de seuil prédéterminée.

Le système 60 de détection d'une fuite d'ammoniac comprend en outre un module 66 d'adaptation du contrôle du catalyseur 42 « SCR » en cas de fuite d'ammoniac.

Si l'enveloppe numérique saturée est supérieure à la valeur de seuil, le module 66 adapte les réglages de contrôle du catalyseur 42 « SCR », et notamment du dispositif d'injection 44. A l'inverse, si l'enveloppe numérique saturée est inférieure à la valeur de seuil, les réglages de contrôle du catalyseur 42 « SCR » restent inchangés.

La valeur de seuil prédéterminée est déterminée lors d'essais en banc d'essais.

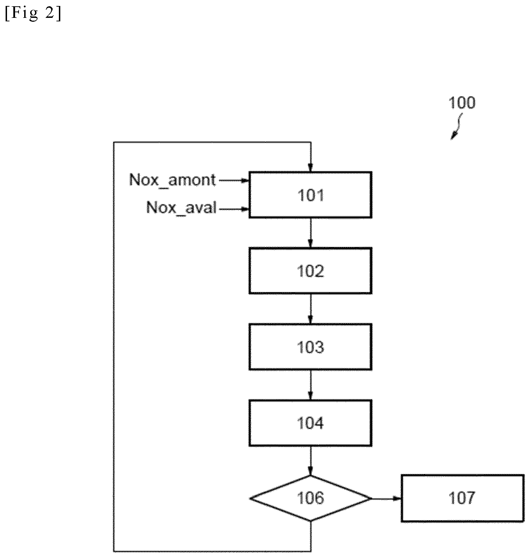

Tel qu'illustré sur la figure 2, un procédé 100 de détection de fuites d'ammoniac comprend une étape 101 de calcul de la différence entre la concentration en oxydes d'azote mesurée par le premier capteur 46 en amont du catalyseur 42 de réduction sélective des oxydes d'azote et la concentration oxydes d'azote mesurée par le deuxième capteur 48 monté en aval du catalyseur 42.

Ladite différence est ensuite filtrée, à l'étape 102, par exemple à l'aide d'un filtre passe-bas, permettant d'atténuer le bruit de cette différence et d'obtenir un signal filtré de ladite différence.

Le procédé 100 comprend en outre une étape 103 de détection d'une enveloppe numérique du signal filtré et une étape 104 de saturation de l'enveloppe numérique du signal filtré entre zéro et l'infini de l'enveloppe numérique. Ainsi, lorsque l'enveloppe numérique est négative, la valeur saturée correspondante est égale à zéro.

A l'étape 104, on détermine une enveloppe numérique saturée.

Le procédé 100 comprend en outre une étape 106 de détermination de fuites d'ammoniac en fonction de l'enveloppe numérique saturée et d'une valeur de seuil prédéterminée.

Si l'enveloppe numérique saturée est supérieure à la valeur de seuil, on adapte, à l'étape 107, les réglages de contrôle du catalyseur 42 « SCR », et notamment du dispositif d'injection 44. A l'inverse, si l'enveloppe numérique saturée est inférieure à la valeur de seuil, les réglages de contrôle du catalyseur 42 « SCR » restent inchangés.

Le système et le procédé de détection de fuites d'ammoniac selon l'invention permettent d'améliorer le compromis entre l'efficacité de dépollution et les fuites d'ammoniac en détectant les fuites d'ammoniac et en donnant une valeur indicative en concentration desdites fuites.

La présente invention n'est pas limitée à une ligne d'échappement comprenant un catalyseur SCR et pourrait s'appliquer à une ligne d'échappement comprenant deux catalyseurs SCR. Dans ce cas, il est important de détecter une fuite d'ammoniac, puisque la fuite d'ammoniac en aval du premier catalyseur SCR pourrait être considérée comme une augmentation d'oxydes d'azote par la sonde d'oxydes d'azote en amont du deuxième catalyseur SCR. Au lieu de diminuer la consigne d'injection de composé à base d'urée, l'UCE pourrait être amenée à l'augmenter.

L'invention peut également être utilisée en série pour détecter des fuites inter pains.

## Revendications

1. Procédé (100) de détection de fuites d'ammoniac en aval d'au moins un catalyseur (42) de réduction sélective d'oxydes d'azote d'une ligne d'échappement (26) d'un système (30) de post-traitement des gaz d'échappement d'un moteur à combustion interne (10), ledit système (30) comprenant un dispositif (44) d'injection d'un agent réducteur directement en amont du catalyseur (42) de réduction sélective d'oxydes d'azote, un premier capteur d'oxydes d'azote (46) disposé en amont dudit catalyseur (42) et un deuxième capteur d'oxydes d'azote (48) disposé en aval dudit catalyseur (42), **caractérisé en ce que** :

- on mesure la concentration en oxydes d'azote par le premier capteur (46),
- on mesure la concentration en oxydes d'azote par le deuxième capteur (48),
- on calcule la différence entre la concentration en oxydes d'azote mesurée par le premier capteur (46) et la concentration oxydes d'azote mesurée par le deuxième capteur (48),
- on filtre ladite différence pour obtenir un signal filtré de ladite différence,
- on détecte une enveloppe numérique du signal filtré,
- on sature ladite enveloppe numérique du signal filtré entre zéro et l'infini pour déterminer une enveloppe numérique saturée,
- on détermine s'il y a des fuites d'ammoniac en fonction de l'enveloppe numérique saturée et d'une valeur de seuil prédéterminée, et
- on adapte les réglages de contrôle du catalyseur (42) si l'enveloppe numérique saturée est supérieure à la valeur de seuil.

2. Procédé (100) selon la revendication 1, dans lequel ladite différence entre la concentration en oxydes d'azote mesurée par le premier capteur (46) et la concentration en oxydes d'azote mesurée par le deuxième capteur (48) est filtrée par un filtre passe-bas.

3. Procédé (100) selon la revendication 1 ou 2, dans lequel lors de l'adaptation des réglages du contrôle du catalyseur, on adapte les réglages du dispositif d'injection (44).

4. Système (60) de détection de fuites d'ammoniac en aval d'au moins un catalyseur (42) de réduction sélective des oxydes d'azote d'une ligne d'échappement (26) d'un système (30) de post-traitement des gaz d'échappement d'un moteur à combustion interne (10), ledit système (30) comprenant un dispositif (44) d'injection d'un agent réducteur directement en amont du catalyseur (42) de réduction sélective des oxydes d'azote, un premier capteur d'oxydes d'azote (46) disposé en amont dudit catalyseur (42) et un deuxième capteur d'oxydes d'azote (48) disposé en aval dudit catalyseur (42), un module (61) de calcul de la différence entre la concentration en oxydes d'azote mesurée par le premier capteur (46) et la concentration oxydes d'azote mesurée par le deuxième capteur (48), **caractérisé en ce qu'**il comprend: un module (62) de filtrage de ladite différence pour obtenir un signal filtré de ladite différence,

- un module (63) de détection d'une enveloppe numérique du signal filtré,
- un module (64) de saturation de ladite enveloppe numérique du signal filtré entre zéro et l'infini pour déterminer une enveloppe numérique saturée,
- un module (65) de détermination de fuites d'ammoniac en fonction de l'enveloppe numérique saturée et d'une valeur de seuil prédéterminée, et
- un module (66) d'adaptation des réglages de contrôle du catalyseur (42) si l'enveloppe numérique saturée est supérieure à la valeur de seuil.

5. Véhicule automobile comprenant un moteur à combustion interne (10) comprenant un système (30) de post-traitement des gaz d'échappement comprenant au moins un catalyseur (42) de réduction sélective d'oxydes d'azote monté dans une ligne d'échappement (26), un dispositif (44) d'injection d'un agent réducteur directement en amont du catalyseur (42) de réduction sélective d'oxydes d'azote, un premier capteur d'oxydes d'azote (46) disposé en amont dudit catalyseur (42), un deuxième capteur d'oxydes d'azote (48) disposé en aval dudit catalyseur (42), et un système (60) de détection de fuites d'ammoniac en aval du catalyseur (42) de réduction sélective des oxydes d'azote selon la revendication 4.

6. Véhicule selon la revendication 5, dans lequel le système (30) de post-traitement des gaz d'échappement comprend au moins un deuxième catalyseur de réduction sélective d'oxydes d'azote monté dans une ligne d'échappement (26) en aval du premier catalyseur (42) de réduction sélective d'oxydes d'azote, le système (60) de détection de fuites d'ammoniac étant configuré pour détecter les fuites d'ammoniac au moins en aval du premier catalyseur (42) de réduction sélective d'oxydes d'azote.

**Patentansprüche**

1. Verfahren (100) zur Erfassung von Ammoniakleckagen stromabwärts von mindestens einem Katalysator (42) zur selektiven Reduktion von Stickoxiden einer Abgasleitung (26) eines Systems (30) zur Nachbehandlung der Abgase eines Verbrennungsmotors (10), wobei das System (30) eine Vorrichtung (44) zum Einspritzen eines Reduktionsmittels direkt stromaufwärts des Katalysators (42) zur selektiven Reduktion von Stickoxiden, einen ersten Stickoxidsensor (46), der stromaufwärts des Katalysators (42) angeordnet ist, und einen zweiten Stickoxidsensor (48), der stromabwärts des Katalysators (42) angeordnet ist, umfasst, **dadurch gekennzeichnet, dass:**

- die Konzentration von Stickoxiden durch den ersten Sensor (46) gemessen wird,
- die Konzentration von Stickoxiden durch den zweiten Sensor (48) gemessen wird,
- die Differenz zwischen der vom ersten Sensor (46) gemessenen Stickoxidkonzentration und der vom zweiten Sensor (48) gemessenen Stickoxidkonzentration berechnet wird,
- die Differenz gefiltert wird, um ein gefiltertes Signal der Differenz zu erhalten,
- eine digitale Hüllkurve des gefilterten Signals erkannt wird,
- die digitale Hüllkurve des gefilterten Signals zwischen Null und Unendlich gesättigt wird, um eine gesättigte digitale Hüllkurve zu bestimmen,
- anhand der gesättigten numerischen Hüllkurve und eines vorbestimmten Schwellenwerts bestimmt wird, ob Ammoniak entweicht, und
- die Einstellungen der Katalysatorsteuerung (42) angepasst werden, wenn die gesättigte digitale Hüllkurve größer als der Schwellenwert ist.

2. Verfahren (100) nach Anspruch 1, wobei die Differenz zwischen der vom ersten Sensor (46) gemessenen Stickoxidkonzentration und der vom zweiten Sensor (48) gemessenen Stickoxidkonzentration durch einen Tiefpassfilter gefiltert wird.

3. Verfahren (100) nach Anspruch 1 oder 2, wobei bei der Anpassung der Einstellungen der Katalysatorsteuerung die Einstellungen der Einspritzvorrichtung (44) angepasst werden.

4. System (60) zur Erkennung von Ammoniaklecks stromabwärts von mindestens einem Katalysator (42) zur selektiven Reduktion von Stickoxiden aus einem Abgasstrang (26) eines Systems (30) zur Nachbehandlung von Abgasen eines Verbrennungsmotors (10), wobei das System (30) umfassend eine Vorrichtung (44) zum Einspritzen eines Reduktionsmittels direkt stromaufwärts des Katalysators (42) zur selektiven Reduktion von Stickoxiden, einen ersten Stickoxidsensor (46), der stromaufwärts des Katalysators (42) angeordnet ist, und einen zweiten Stickoxidsensor einem stromabwärts des Katalysators (42) angeordneten Sensor (48), einem Modul (61), das die Differenz zwischen der vom ersten Sensor (46) gemessenen Stickoxidkonzentration und der vom zweiten Sensor (48) gemessenen Stickoxidkonzentration berechnet,
**dadurch gekennzeichnet, dass** es Folgendes umfasst:
ein Modul (62) zum Filtern der Differenz, um ein gefiltertes Signal der Differenz zu erhalten,

- ein Modul (63) zur Erkennung einer digitalen Hüllkurve des gefilterten Signals,
- ein Modul (64) zur Sättigung der digitalen Hüllkurve des zwischen Null und Unendlich gefilterten Signals, um eine gesättigte digitale Hüllkurve zu bestimmen,
- ein Modul (65) zur Bestimmung von Ammoniaklecks in Abhängigkeit von der gesättigten digitalen Hüllkurve und einem vorgegebenen Schwellenwert, und
- ein Modul (66) zum Anpassen der Steuereinstellungen des Katalysators (42), wenn die gesättigte digitale Hüllkurve größer als der Schwellenwert ist.

5. Kraftfahrzeug mit einem Verbrennungsmotor (10), der ein System (30) zur Nachbehandlung der Abgase umfasst, das mindestens einen Katalysator (42) zur selektiven Reduktion von Stickoxiden, der in einer Abgasleitung (26) montiert ist, eine Vorrichtung (44) zum Einspritzen eines Reduktionsmittels direkt vor dem Katalysator (42) zur selektiven Reduktion von Stickoxiden umfasst, einen ersten Stickoxidsensor (46), der stromaufwärts des Katalysators (42) angeordnet ist, einen zweiten Stickoxidsensor (48), der stromabwärts des Katalysators (42) angeordnet ist, und ein System (60) zur Erkennung von Ammoniakleckagen stromabwärts des Katalysators (42) zur selektiven Reduktion von Stickoxiden nach Anspruch 4.

6. Fahrzeug nach Anspruch 5, wobei das Abgasnachbehandlungssystem (30) mindestens einen zweiten Katalysator zur selektiven Reduktion von Stickoxiden umfasst, der in einer Abgasleitung (26) stromabwärts des ersten Katalysators (42) zur selektiven Reduktion von Stickoxiden angebracht ist, wobei das Ammoniakleckdetektionssystem (60) so konfiguriert ist, dass es Ammoniakleckagen mindestens stromabwärts des ersten Katalysators (42) zur selektiven Reduktion von Stickoxiden detektiert.

**Claims**

1. A method (100) for detecting ammonia leakage downstream of at least one catalyst (42) for selective reduction of nitrogen oxides in an exhaust line (26) of a system (30) for aftertreatment of exhaust gases from an internal combustion engine (10), said system (30) comprising a device (44) for injecting a reducing agent directly upstream of the catalyst (42) for selective reduction of nitrogen oxides, a first nitrogen oxide sensor (46) arranged upstream of said catalyst (42) and a second nitrogen oxide sensor (48) arranged downstream of said catalyst (42), **characterized in that:**

   - the concentration of nitrogen oxides is measured by the first sensor (46),
   - the concentration of nitrogen oxides is measured by the second sensor (48),
   - the difference between the nitrogen oxide concentration measured by the first sensor (46) and the nitrogen oxide concentration measured by the second sensor (48) is calculated,
   - said difference is filtered to obtain a filtered signal of said difference,
   - a digital envelope of the filtered signal is detected,
   - said digital envelope of the filtered signal is saturated between zero and infinity to determine a saturated digital envelope,
   - ammonia leakage is determined as a function of the saturated digital envelope and a predetermined threshold value, and
   - the catalyst (42) control settings are adapted if the saturated digital envelope exceeds the threshold value.

2. The method (100) according to claim 1, wherein said difference between the concentration of nitrogen oxides measured by the first sensor (46) and the concentration of nitrogen oxides measured by the second sensor (48) is filtered by a low-pass filter.

3. The method (100) according to claim 1 or 2, wherein when adapting the catalyst control settings, the settings of the injection device (44) are adapted.

4. The system (60) for detecting ammonia leakage downstream of at least one catalyst (42) for selective reduction of nitrogen oxides in an exhaust line (26) of a system (30) for the aftertreatment of exhaust gases from an internal combustion engine (10), said system (30) comprising a device (44) for injecting a reducing agent directly upstream of the catalyst (42) for selective reduction of nitrogen oxides, a first nitrogen oxide sensor (46) located upstream of said catalyst (42) and a second nitrogen oxide sensor (48) located downstream of said catalyst (42), a module (61) for calculating the difference between the nitrogen oxide concentration measured by the first sensor (46) and the nitrogen oxide concentration measured by the second sensor (48),
   **characterized in that** it comprises:
   a module (62) for filtering said difference to obtain a filtered signal of said difference,

   - a module (63) for detecting a digital envelope of the filtered signal,
   - a module (64) for saturating said digital envelope of the filtered signal between zero and infinity to determine a saturated digital envelope,
   - a module (65) for determining ammonia leakage as a function of the saturated digital envelope and a predetermined threshold value, and
   - a module (66) for adapting the catalyst (42) control settings if the saturated digital envelope exceeds the threshold value.

5. A motor vehicle comprising an internal combustion engine (10) comprising an exhaust gas aftertreatment system (30) comprising at least one catalyst (42) for selective reduction of nitrogen oxides mounted in an exhaust line (26), a device (44) for injecting a reducing agent directly upstream of the catalyst (42) for selective reduction of nitrogen oxides, a first nitrogen oxide sensor (46) arranged upstream of said catalyst (42), a second nitrogen oxide sensor (48) arranged downstream of said catalyst (42), and an ammonia leak detection system (60) downstream of the catalyst (42) for selective reduction of nitrogen oxides according to claim 4.

6. The vehicle according to claim 5, wherein the exhaust gas aftertreatment system (30) comprises at least one second catalyst for selective reduction of nitrogen oxides mounted in an exhaust line (26) downstream of the first catalyst (42) for selective reduction of nitrogen oxides, the ammonia leakage detection system (60) being configured to detect ammonia leakage at least downstream of the first catalyst (42) for selective reduction of nitrogen oxides.

[Fig 1]

[Fig 2]

## RÉFÉRENCES CITÉES DANS LA DESCRIPTION

**Documents brevets cités dans la description**

- US 2005028285 A
- US 20110005202 A
- FR 3015558 A1
- WO 2014070244 A1